# EUROPEAN PATENT SPECIFICATION

(11) **EP 3 070 432 B1**
(45) Date of publication and mention of the grant of the patent: **16.05.2018**
(21) Application number: 16160515.9
(22) Date of filing: 15.03.2016
(51) Int. Cl.: G01B 11/25, G06T 7/00

(54) **MEASUREMENT APPARATUS**
MESSVORRICHTUNG
APPAREIL DE MESURE

(30) Priority: 18.03.2015 JP 2015055357
(43) Date of publication of application: 21.09.2016
(73) Proprietor: Canon Kabushiki Kaisha, Tokyo 146-8501 (JP)
(72) Inventor: KITAMURA, Tsuyoshi, Ohta-ku Tokyo (JP); TOKIMITSU, Takumi, Ohta-ku Tokyo (JP)
(74) Representative: Walker, Philip Martin

(56) References cited:
- US-A- 5 852 672
- US-A1- 2002 196 415
- US-A1- 2009 003 686

## Description

### BACKGROUND OF THE INVENTION

### Field of the Invention

The present invention relates to a measurement apparatus for measuring the shape of an object to be measured.

### Description of the Related Art

There is known an optical measurement apparatus which may be used for measuring (evaluating) the shape of an object to be measured. Optical measurement apparatuses based on various methods are available. One of these methods is a method called a pattern projection method. In the pattern projection method, an image is captured by projecting a predetermined pattern on an object to be measured, a pattern in the captured image is detected, and range information at each pixel position is calculated based on the principle of triangulation, thereby obtaining the shape of the object to be measured. Various types of patterns are used in the pattern projection method. A representative pattern is a stripe pattern alternately including bright lines and dark lines, as disclosed in Japanese Patent Laid-Open No. 3-293507.

A factor contributing to decreasing the measurement accuracy in the pattern projection method is the influence of random noise in a captured image. To cope with this, a technique of reducing the influence of random noise by increasing detection points when detecting a pattern in a captured image, and thus improving the measurement accuracy is proposed in "Meeting on Image Recognition and Understanding (MIRU 2009), pp. 222-229" (literature 1). In detection of a pattern in a captured image, it is common practice to specify pattern coordinates by detecting peaks at which the luminance value of an image of the pattern is highest. In literature 1, a high detection point density (an increase in detection point density) is achieved by detecting negative peaks at which the luminance value of the image of the pattern is lowest in addition to the above peaks.

In literature 1, however, a highest detection point density is not achieved when detecting the pattern in the captured image. Furthermore, even if a high density is achieved by increasing detection points, if the detection accuracy at each detection point is low, the measurement accuracy with which the shape of the object to be measured is measured is not improved. Therefore, to improve the measurement accuracy, it is necessary to achieve the highest detection point density while maintaining the detection accuracy at a given level when detecting a pattern in a captured image.
US2002/196415 describes three types of object shooting, i.e., a projection pattern shooting using a pattern including both characterization of a stripe based on a color and characterization based on a gradation of the same component, a flash shooting without a pattern and a non-flash shooting without a pattern. A two-dimensional image information generation portion corrects the influence of a surface reflectivity of an object or external light from the three types of images, and estimates a pattern structure using the characteristic based on a color with respect to an object having a white-based color or a low-saturation color and based on a gradation with respect to an object having a high-saturation color. A depth calculation portion specifies the correspondence relationship between the estimated pattern structure and information of the projected pattern, and calculates a depth of each part of the object based on a result of specification.
US2009/003686 describes processing images including projecting an infra-red pattern onto a three-dimensional object and producing a first image, a second image, and a third image of the three-dimensional object while the pattern is projected on the three-dimensional object. The first image and the second image include the three-dimensional object and the pattern. The first image and the second image are produced by capturing at a first camera and a second camera, respectively, light filtered through an infra-red filter. The third image includes the three-dimensional object but not the pattern. Processing the images also includes establishing a first-pair correspondence between a portion of pixels in the first image and a portion of pixels in the second image. Processing the images further includes constructing, based on the first-pair correspondence and the third image, a two-dimensional image that depicts a three-dimensional construction of the three-dimensional object.
US5852672 describes a three-dimensional motion camera system comprising a light projector placed between two synchronous video cameras all focused on an object-of-interest. The light projector shines a sharp pattern of vertical lines (Ronchi ruling) on the object-of-interest that appear to be bent differently to each camera by virtue of the surface shape of the object-of-interest and the relative geometry of the cameras, light projector and object-of-interest Each video frame is captured in a computer memory and analyzed. Since the relative geometry is known and the system pre-calibrated, the unknown three-dimensional shape of the object-of-interest can be solved for by matching the intersections of the projected light lines with orthogonal epipolar lines corresponding to horizontal rows in the video camera frames. A surface reconstruction is made and displayed on a monitor screen. For 360 DEG all around coverage of the object-of-interest, two additional sets of light projectors and corresponding cameras are distributed about 120 DEG apart from one another.

### SUMMARY OF THE INVENTION

The present invention provides a measurement apparatus that is advantageous in that it can improve the measurement accuracy with which the shape of an object is measured.

The present invention in its first aspect provides a measurement apparatus as specified in claims 1 to 8, and a measurement method as specified in claim 9.

Further features of the present invention will become apparent from the following description of embodiments with reference to the attached drawings.

### BRIEF DESCRIPTION OF THE DRAWINGS

Fig. 1 is a schematic view showing the arrangement of a measurement apparatus in an embodiment of the present invention.
Fig. 2 is a view showing an example of a line pattern to be projected on an object to be measured in the measurement apparatus shown in Fig. 1.
Fig. 3 is a graph showing examples of luminance distributions obtained from range images.
Fig. 4 is a graph showing examples of luminance gradients obtained from the luminance distributions shown in Fig. 3.
Fig. 5 is a graph showing examples of luminance distributions obtained from range images.
Fig. 6 is a graph showing examples of luminance gradients obtained from the luminance distributions shown in Fig. 5.
Fig. 7 is a graph showing an example of the point spread function of an image capturing optical system in the measurement apparatus shown in Fig. 1.
Fig. 8 is a graph showing examples of the luminance distributions of line patterns normalized by the spread width of the point spread function of the image capturing optical system.
Fig. 9 is a graph showing examples of luminance gradients obtained from the luminance distributions shown in Fig. 8.
Fig. 10 is a graph showing the relationship between an accidental error and the line pitch of the line pattern.

### DESCRIPTION OF THE EMBODIMENTS

Preferred embodiments of the present invention will be described below with reference to the accompanying drawings. Note that the same reference numerals denote the same items throughout the drawings, and a repetitive description thereof will not be given.

### <First Embodiment>

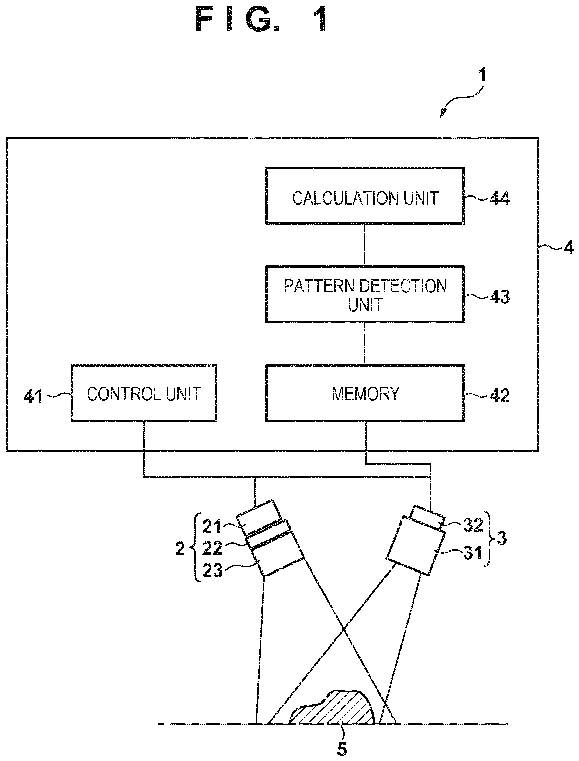

Fig. 1 is a schematic view showing the arrangement of a measurement apparatus 1 as an aspect of the present invention. Using the pattern projection method, the measurement apparatus 1 measures the shape (for example, the three-dimensional shape, two-dimensional shape, position and attitude, and the like) of an object 5 to be measured. The measurement apparatus 1 includes a projection unit 2, an image capturing unit 3, and a processing unit 4, as shown in Fig. 1.

The projection unit 2 includes, for example, a light source unit 21, a pattern generation unit 22, and a projection optical system 23, and projects a predetermined pattern on the object 5 to be measured. The light source unit 21 uniformly illuminates, for example, Koehler-illuminates a pattern generated by the pattern generation unit 22 with light emitted from a light source. The pattern generation unit 22 generates a pattern (pattern light) to be projected on the object 5 to be measured, and is formed from a mask on which a pattern is formed by plating a glass substrate with chromium in this embodiment. Note that the pattern generation unit 22 may be formed from a DLP (Digital Light Processing) projector, a liquid crystal projector, or the like capable of generating an arbitrary pattern. The projection optical system 23 is an optical system for projecting the pattern generated by the pattern generation unit 22 on the object 5 to be measured.

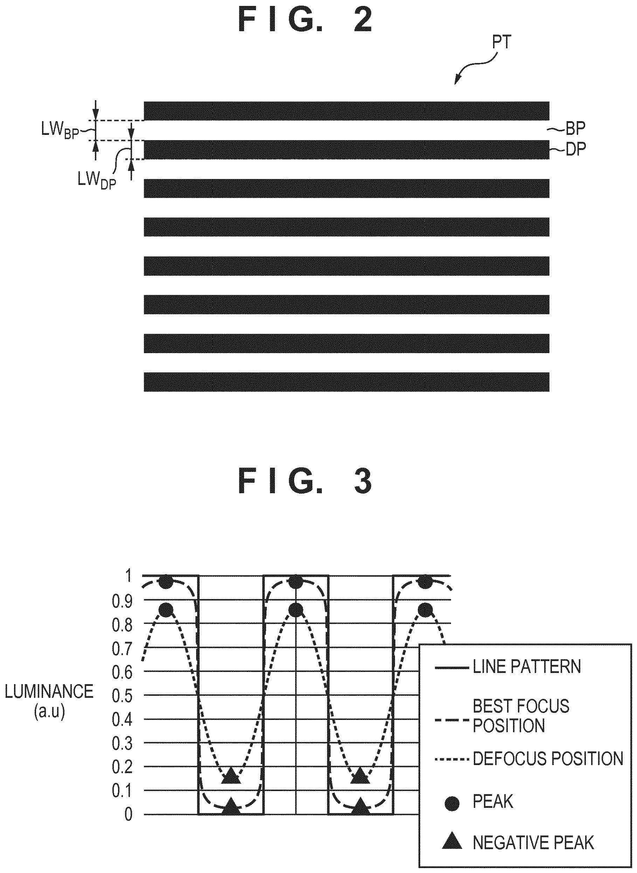

Fig. 2 is a view showing a line pattern PT as an example of the pattern which is generated by the pattern generation unit 22 and projected on the object 5 to be measured according to this embodiment. The line pattern PT is a periodic line pattern (stripe pattern) alternately including bright portions BP each formed by a bright line and dark portions DP each formed by a dark line, as shown in Fig. 2. As described later, the ratio (to be referred to as the "duty ratio" hereinafter) of a width (line width) LW_{BP} of the bright portion BP of the line pattern PT and a width LW_{DP} of the dark portion DP of the line pattern PT is 1 : 1.

The image capturing unit 3 includes, for example, an image capturing optical system 31 and an image sensor 32, and obtains an image by capturing the object 5 to be measured. In this embodiment, the image capturing unit 3 captures the object 5 to be measured on which the line pattern PT is projected, and obtains an image including a portion corresponding to the line pattern PT, that is, a so-called range image (first image). In this embodiment, the image capturing optical system 31 is an optical system for forming, on the image sensor 32, an image of the line pattern PT projected on the object 5 to be measured. The image sensor 32 is an image sensor including a plurality of pixels for capturing the object 5 to be measured on which the pattern is projected, and is formed by, for example, a CMOS sensor or CCD sensor.

Based on the image obtained by the image capturing unit 3, the processing unit 4 obtains the shape of the object 5 to be measured. The processing unit 4 includes a control unit 41, a memory 42, a pattern detection unit 43, and a calculation unit 44. The control unit 41 controls the operations of the projection unit 2 and image capturing unit 3 and, more specifically, controls projection of the pattern on the object 5 to be measured, image capturing of the object 5 to be measured on which the pattern is projected, and the like. The memory 42 stores the image obtained by the image capturing unit 3. Using the image stored in the memory 42, the pattern detection unit 43 specifies pattern coordinates, that is, the position of the pattern in the image by detecting the pattern in the image. The calculation unit 44 calculates range information (three-dimensional information) of the object 5 to be measured at each pixel position of the image sensor 32 based on the principle of triangulation.

Detection of the pattern by the pattern detection unit 43 will be described in detail below. In this embodiment, the pattern detection unit 43 detects the line pattern PT included in the range image, and specifies the position of the line pattern PT in the range image. More specifically, the pattern detection unit 43 specifies the position of the line pattern PT in the range image from optical image information, that is, a luminance distribution in the evaluation cross section in the line vertical direction of the line pattern PT.

Fig. 3 is a graph showing examples of luminance distributions obtained from range images obtained by projecting the line pattern PT (Fig. 2) having a duty ratio of 1 : 1 on the object 5 to be measured, and capturing the object 5 to be measured. Fig. 3 shows a luminance distribution obtained from a range image obtained by capturing the line pattern PT at a best focus position, and a luminance distribution obtained from a range image obtained by capturing the line pattern PT at a position (defocus position) deviated from the best focus position.

To specify the position of the line pattern PT from the luminance distributions shown in Fig. 3, the positions of peaks at which the luminance value is highest (local maximum), that is, peak positions are generally detected, as indicated by solid circles in the luminance distributions. Furthermore, in the luminance distributions, in addition to the peak positions, the positions of negative peaks at which the luminance value is lowest (local minimum), that is, negative peak positions may be detected, as indicated by solid triangles.

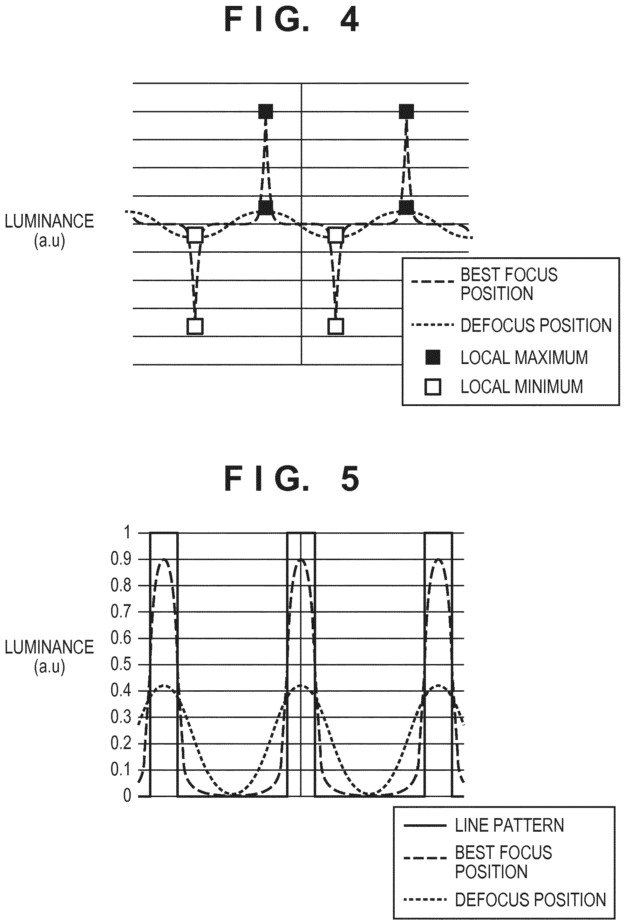

In this embodiment, when specifying the position of the line pattern PT, local maximum positions and local minimum positions in luminance gradients obtained from the luminance distributions are detected. Each luminance gradient can be generated by differentiating the luminance distribution. Fig. 4 is a graph showing examples of the luminance gradients obtained from the luminance distributions shown in Fig. 3. Similarly to Fig. 3, Fig. 4 shows luminance gradients obtained from the luminance distributions with respect to each of the best focus position and defocus position. In this embodiment, with respect to the luminance gradients shown in Fig. 4, local maximum positions indicated by solid rectangles and local minimum positions indicated by open rectangles are detected. This makes it possible to detect edges existing on both sides of the peak of each line of the line pattern PT. The "local maximum positions" and "local minimum positions" may collectively be referred to as "edge positions" hereinafter.

As described above, in this embodiment, at least one of the peak position and negative peak position in each luminance distribution and at least one of the local maximum position and local minimum position in each luminance gradient are obtained by calculation. Therefore, up to four detection points are obtained for one line forming the line pattern PT by selecting positions as detection targets, that is, detection points from the peak positions, negative peak positions, local maximum positions, and local minimum positions. It is thus possible to increase the density by increasing detection points when detecting the line pattern PT, and to reduce the influence of random noise which decreases the measurement accuracy in the pattern projection method.

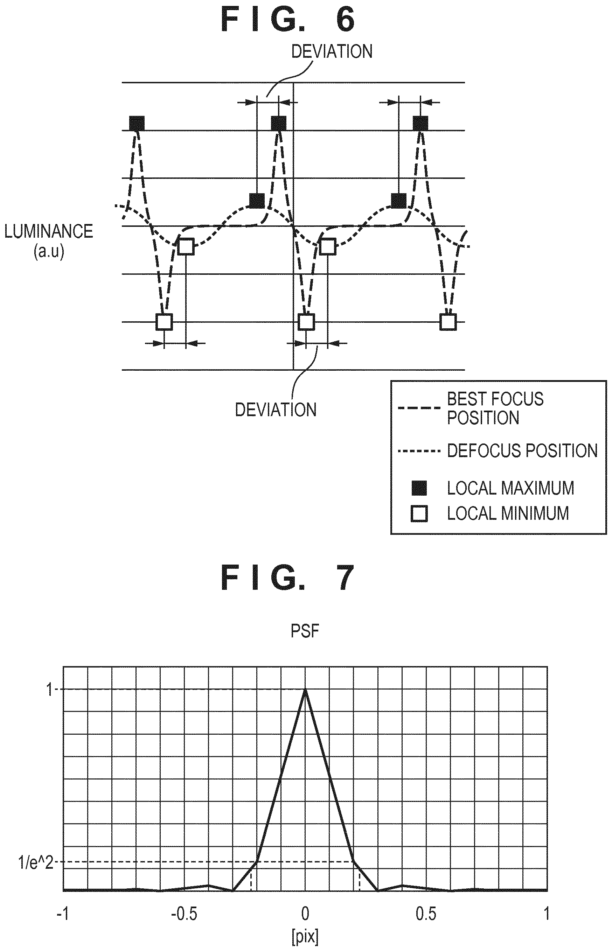

The reason why the line pattern PT preferably has a duty ratio of 1 : 1 when detecting edge positions will now be explained. Fig. 5 is a graph showing examples of luminance distributions obtained from range images obtained by projecting a line pattern having a duty ratio of 1 : 4 on the object 5 to be measured, and capturing the object 5 to be measured. Fig. 5 shows luminance distributions obtained from range images respectively obtained by capturing the line pattern at the best focus position and defocus position. Fig. 6 is a graph showing examples of luminance gradients obtained from the luminance distributions shown in Fig. 5, that is, examples of luminance gradients generated by differentiating the luminance distributions shown in Fig. 5.

Referring to Fig. 6, it is understood that local maximum positions and local minimum positions detected in the luminance gradient corresponding to the defocus position are deviated from those detected in the luminance gradient corresponding to the best focus position. If the position of the line pattern is specified using the detection points containing such errors, the specified position of the line pattern also contains an error, as a matter of course. In other words, even if the line pattern PT is detected using the detection points containing many errors, it is impossible to improve the measurement accuracy with which the shape of the object 5 to be measured is measured.

On the other hand, in the line pattern PT having a duty ratio of 1 : 1, as shown in Fig. 4, no deviation is generated between local maximum positions or local minimum positions detected in the luminance gradients respectively corresponding to the best focus position and defocus position. This is because the contrast of an image of the line pattern PT having a duty ratio of 1 : 1 changes due to defocusing but no position deviation is generated with respect to the peak positions, negative peak positions, and edge positions as almost intermediate points between the peak positions and the negative peak positions. Therefore, one condition for using the edge points as detection points for which the detection accuracy is maintained is that the duty ratio of a line pattern to be projected on the object 5 to be measured is 1 : 1.

The fact that a line pitch as a pitch at which the bright portion BP and dark portion DP of the line pattern PT are repeated, that is, the period of the line pattern PT is restricted by paying attention to the detection accuracy of the peak positions and negative peak positions in the luminance distribution will be described next. Determinants of the detection accuracy of the peak positions, negative peak positions, and edge positions are peak sharpness and edge steepness in an image of the line pattern PT. Each of the peak sharpness and edge steepness in the image of the line pattern PT is determined based on not only the line pattern PT but also the point spread function (PSF) of the image capturing optical system 31.

The line pitch of the line pattern PT varies depending on the purpose of the measurement apparatus 1, and the image of the line pattern PT is represented by overlapping with the PSF of the image capturing optical system 31. Therefore, it is possible to uniformly express the measurement performance of the measurement apparatus 1 by normalizing the line pitch of the line pattern PT by setting the spread width (predetermined width) of the PSF of the image capturing optical system 31 as a unit.

Fig. 7 is a graph showing an example of the PSF of the image capturing optical system 31. In this embodiment, as shown in Fig. 7, 1/e² of a peak value in the PSF of the image capturing optical system 31 is defined as the spread width of the PSF of the image capturing optical system 31. A condition to be satisfied by a line pitch to be projected on the object 5 to be measured for obtaining sufficient detection accuracy of peak positions and negative peak positions with respect to the value obtained by normalizing the line pitch in an actual range image by the spread width of the PSF of the image capturing optical system 31 will be described below.

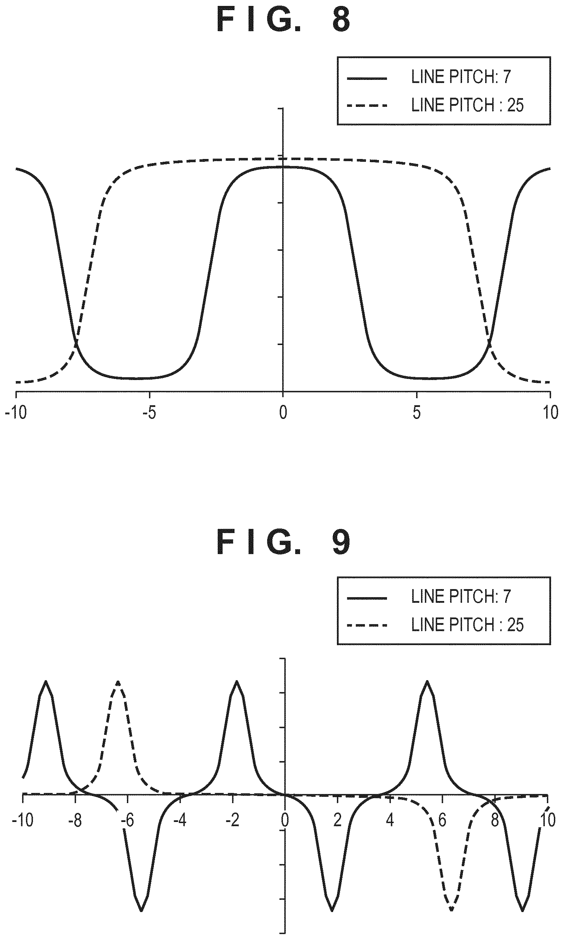

Fig. 8 is a graph showing the luminance distribution of a line pattern when a line pitch normalized by the spread width of the PSF of the image capturing optical system 31 is 7, and the luminance distribution of a line pattern when a line pitch normalized by the spread width of the PSF of the image capturing optical system 31 is 25. Fig. 9 is a graph showing examples of luminance gradients obtained from the luminance distributions shown in Fig. 8, that is, examples of luminance gradients generated by differentiating the luminance distributions shown in Fig. 8. Peak positions and negative peak positions in the luminance distributions can be detected by calculating zero-crossing positions in the luminance gradients, that is, positions at which the luminance gradients become zero.

Referring to Fig. 9, when the line pitch is 7, the value abruptly changes near each zero-crossing position. When the line pitch is 25, the value gradually changes near each zero-crossing position. In consideration of the influence of random noise, it is apparent that a zero-crossing position detection error becomes large when the line pitch is 25, as compared with a case in which the line pitch is 7. On the other hand, with respect to steepness of the value near each of local maximum positions and local minimum positions in the luminance gradients, there is almost no difference between a case in which the line pitch is 7 and a case in which the line pitch is 25. Therefore, an edge position detection error caused by the influence of random noise is considered not to depend on a change in line pitch.

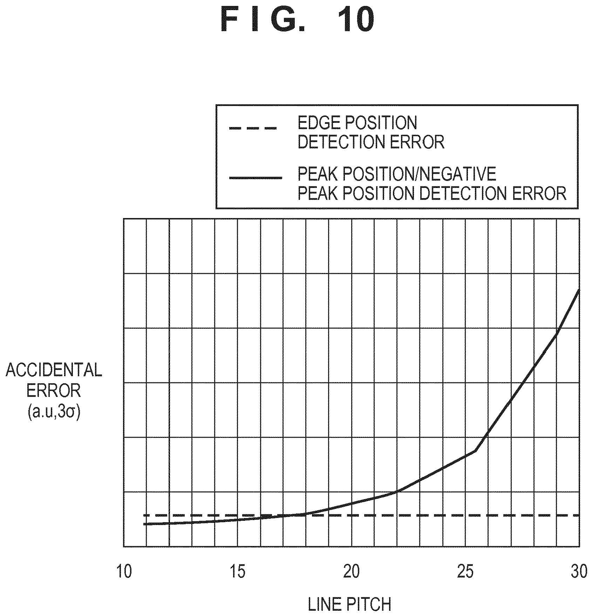

Fig. 10 is a graph showing the relationship between an accidental error and the line pitch of the line pattern to be projected on the object 5 to be measured. In Fig. 10, the number of pixels of the line pitch normalized by the spread width of the PSF of the image capturing optical system 31 is adopted for the abscissa, and an accidental error (3σ) caused by random noise in detection at each detection point is adopted for the ordinate. Referring to Fig. 10, it is understood that an edge position detection error hardly depends on the line pitch but a peak position/negative peak position detection error abruptly increases with an increase in line pitch.

When detecting peak positions and negative peak positions, it is necessary to sufficiently decrease the line pitch. In other words, if the line pitch is not made sufficiently small, the detection accuracy of peak positions and negative peak positions decreases, thereby making impossible to improve the measurement accuracy with which the shape of the object 5 to be measured is measured. Referring to Fig. 10, with respect to a line pattern with a line pitch larger than 22, the accidental error abruptly increases. Therefore, the line pitch of the line pattern to be projected on the object 5 to be measured is preferably set to 22 or less.

As described above, in this embodiment, to specify the position of the line pattern PT, at least one of the peak position and negative peak position in each luminance distribution and at least one of the local maximum position and local minimum position in each luminance gradient are obtained by calculation. This can increase the density by increasing detection points when detecting the line pattern PT, and reduce the influence of random noise. In this embodiment, by setting the duty ratio of the line pattern PT to 1 : 1, a decrease in detection accuracy of edge positions is suppressed. Furthermore, in this embodiment, by setting the period of the line pattern PT on the image sensor to 22 or less using a value normalized by the spread width of the SPF of the image capturing optical system 31, a decrease in detection accuracy of peak positions and negative peak positions is suppressed. Consequently, the measurement apparatus 1 according to this embodiment can increase the detection point density while maintaining the detection accuracy at a given level when detecting the line pattern PT in a range image, thereby obtaining, with high accuracy, three-dimensional shape information of the object 5 to be measured from the range image.

### <Second Embodiment>

In the first embodiment, the periodic line pattern PT (Fig. 2) alternately including the bright portions BP and the dark portions DP has been explained as a pattern to be projected on the object 5 to be measured for obtaining a range image. However, the present invention is not limited to this. There is known a technique of including, in a line pattern, a feature portion for identifying the bright portion or dark portion of the line pattern in order to specify information of a position in the line pattern, which is indicated by each pixel in a range image obtained by an image capturing unit 3. This technique can obtain absolute three-dimensional shape information of an object 5 to be measured from one range image obtained by the image capturing unit 3 (one image capturing operation by the image capturing unit 3). Therefore, this technique is suitable for a case in which three-dimensional shape information of the moving object 5 to be measured is desirably obtained in real time.

There are, for example, a plurality of dots arrayed in the bright portion or dark portion as the feature portion included in the line pattern, that is, the feature portion for identifying the bright portion or dark portion of the line pattern. The line pattern including such dots as a feature portion will also be referred to as a dot line pattern hereinafter. A feature portion for identifying the bright portion or dark portion may be set by changing the line width of the bright portion or dark portion of the line pattern. Such line pattern will also be referred to as a line width modulated pattern hereinafter. As a line pattern including a feature portion for identifying a bright portion or dark portion, a line pattern including a color pattern encoded by color is also available.

When projecting the line pattern including the feature portion on the object 5 to be measured, it is necessary to change a pattern generated by a light source unit 21 or a pattern generation unit 22 in accordance with the line pattern. Note that since, for example, the principle for obtaining three-dimensional shape information of the object 5 to be measured from a range image obtained by capturing, by the image capturing unit 3, the object 5 to be measured remains unchanged, the condition of the line pattern to be projected on the object 5 to be measured and the obtained effects are the same as in the first embodiment.

### <Third Embodiment>

A measurement apparatus 1 can further include an illumination unit (not shown) for uniformly illuminating an object 5 to be measured so as not to form a shadow on the object 5 to be measured. As an illumination method for uniformly illuminating the object 5 to be measured, for example, ring illumination, coaxial epi-illumination, and dome illumination are available. In this case, in addition to a range image, an image capturing unit 3 obtains a grayscale image (second image) by capturing the object 5 to be measured which is uniformly illuminated by the illumination unit. Based on the grayscale image obtained by the image capturing unit 3, a processing unit 4 obtains two-dimensional shape information of the object 5 to be measured. Note that the two-dimensional shape information of the object 5 to be measured includes, for example, information about the edge of the object 5 to be measured. Furthermore, based on the three-dimensional shape information of the object 5 to be measured, which is obtained from the range image, the two-dimensional shape information of the object 5 to be measured, which is obtained from the grayscale image, and a model expressing the shape of the object 5 to be measured, the processing unit 4 obtains the position and attitude of the object 5 to be measured. More specifically, the processing unit 4 obtains the position and attitude of the object 5 to be measured by model fitting using the two pieces of information, that is, the three-dimensional shape information and two-dimensional shape information of the object 5 to be measured. Note that the model fitting is performed for a CAD model of the object 5 to be measured, which has been created in advance.

While the present invention has been described with reference to embodiments, it is to be understood that the invention is not limited to the disclosed embodiments.

## Claims

1. A measurement apparatus (1) for measuring a shape of an object, comprising:
projection means (2) for projecting, on the object, pattern light alternately including bright portions and dark portions;
image capturing means (3) for capturing an image of the object on which the pattern light is projected; and
processing means (4) for specifying at least one of a peak position at which a luminance value is local maximum in a luminance distribution obtained from the captured image and a peak position at which the luminance value is local minimum in the luminance distribution, and specifying at least one of a local maximum position and a local minimum position in a luminance gradient obtained from the luminance distribution, and obtaining, based on the specified positions, information relating to the shape of the object, wherein a ratio between a width of the bright portion and a width of the dark portion in the pattern light is 1 : 1,
wherein
the image capturing means (3) comprises an image sensor (32), and an image capturing optical system (31) configured to form, on the image sensor (32), an image comprising the pattern light projected on the object to be measured,
wherein a period of the pattern light on the image sensor (32) is set so that a value, obtained by normalizing the period of the pattern light on the image sensor (32) by a spread width of a point spread function of the image capturing optical system (31), is not larger than 22.

2. The apparatus according to claim 1, wherein the spread width is 1/e² of a peak value in the point spread function.

3. The apparatus according to claim 1, wherein the processing means (4) is arranged to generate the luminance gradient by differentiating the luminance distribution.

4. The apparatus according to claim 1, wherein the pattern light includes a feature portion for identifying one of the bright portion and the dark portion.

5. The apparatus according to claim 4, wherein the feature portion comprises a plurality of dots arrayed in one of the bright portion and the dark portion.

6. The apparatus according to claim 1, further comprising:
illumination means (21) for uniformly illuminating the object,
wherein the image capturing means (3) is arranged to capture an image of the object that is uniformly illuminated by the illumination means (21), and
the processing means (4) is arranged to obtain two-dimensional shape information of the object, based on captured image capturing the object, which is uniformly illuminated by the illumination means (21).

7. The apparatus according to claim 6, wherein the two-dimensional shape information includes information about an edge of the object.

8. The apparatus according to claim 6, wherein the processing means (4) is further arranged
to obtain three-dimensional shape information of the object, based on the image captured of the object on which the pattern light is projected, and
to obtain a position and attitude of the object, based on the three-dimensional shape information and the two-dimensional shape information and a model expressing the shape of the object.

9. A measurement method for measuring a shape of an object, comprising the steps of:
projecting, on the object, pattern light alternately including bright portions and dark portions;
capturing an image of the object on which the pattern light is projected; and
specifying at least one of a peak position at which a luminance value is local maximum in a luminance distribution obtained from the captured image and a peak position at which the luminance value is local minimum in the luminance distribution, and specifying at least one of a local maximum position and a local minimum position in a luminance gradient obtained from the luminance distribution, and obtaining, based on the specified positions, information relating to the shape of the object,
wherein a ratio between a width of the bright portion and a width of the dark portion in the pattern light is 1 : 1,
wherein a period of the pattern light in the captured image is set so that a value, obtained by normalizing the period of the pattern light by a spread width of a point spread function of an image capturing optical system for forming an image comprising the pattern light projected on the object to capture the captured image, is not larger than 22, and
wherein the spread width is 1/e² of a peak value in the point spread function.

## Patentansprüche

1. Messvorrichtung (1) zum Messen einer Form eines Objekts, umfassend:
eine Projektionseinrichtung (2) zum Projizieren von Musterlicht, das abwechselnd helle Abschnitte und dunkle Abschnitte enthält, auf das Objekt;
eine Bildaufnahmeeinrichtung (3) zur Aufnahme eines Bilds des Objekts, auf das das Musterlicht projiziert wird; und
Verarbeitungseinrichtung (4) zum Spezifizieren einer Spitzenposition, bei der ein Luminanzwert ein lokales Maximum in einer vom aufgenommenen Bild erhaltenen Luminanzverteilung ist, und/oder einer Spitzenposition, bei der der Luminanzwert ein lokales Minimum in der Luminanzverteilung ist, und zum Spezifizieren einer Position eines lokalen Maximums und/oder einer Position eines lokalen Minimums in einem von der Luminanzverteilung erhaltenen Luminanzgradienten, und zum Erhalten von Information bezüglich der Form des Objekts basierend auf den spezifizierten Positionen, wobei ein Verhältnis zwischen einer Breite des hellen Abschnitts und einer Breite des dunklen Abschnitts im Musterlicht 1:1 beträgt,
wobei die Bildaufnahmeeinrichtung (3) einen Bildsensor (32) und ein optisches Bildaufnahmesystem (31) umfasst, das konfiguriert ist, auf dem Bildsensor (32) ein Bild zu erzeugen, das das auf das zu messende Objekt projizierte Musterlicht umfasst,
wobei eine Periode des Musterlichts auf dem Bildsensor (32) so eingestellt wird, dass ein Wert, der durch Normieren der Periode des Musterlichts auf dem Bildsensor (32) durch eine Spread-Breite einer Point-Spread-Funktion des optischen Bildaufnahmesystems (31) erhalten wird, nicht größer als 22 ist.

2. Vorrichtung nach Anspruch 1, wobei die Spread-Breite 1/e² eines Spitzenwertes in der Point-Spread-Funktion ist.

3. Vorrichtung nach Anspruch 1, wobei die Verarbeitungseinrichtung (4) ausgebildet ist, den Luminanzgradienten durch Differenzieren der Luminanzverteilung zu erzeugen.

4. Vorrichtung nach Anspruch 1, wobei das Musterlicht einen Merkmalsabschnitt zum Identifizieren des hellen Abschnitts und/oder des dunklen Abschnitts enthält.

5. Vorrichtung nach Anspruch 4, wobei der Merkmalsabschnitt mehrere Flecken umfasst, die im hellen Abschnitt und/oder im dunklen Abschnitt angeordnet sind.

6. Vorrichtung nach Anspruch 1, weiterhin umfassend:
eine Beleuchtungseinrichtung (21) zum gleichmäßigen Beleuchten des Objekts,
wobei die Bildaufnahmeeinrichtung (3) ausgebildet ist, ein Bild des von der Beleuchtungseinrichtung (21) gleichmäßig beleuchteten Objekts aufzunehmen, und
wobei die Verarbeitungseinrichtung (4) ausgebildet ist, basierend auf dem aufgenommenen Bild, das das von der Beleuchtungseinrichtung (21) gleichmäßig beleuchtete Objekt aufnimmt, Information über die zweidimensionale Form des Objekts zu erhalten.

7. Vorrichtung nach Anspruch 6, wobei die Information über die zweidimensionale Form Information über eine Kante des Objekts enthält.

8. Vorrichtung nach Anspruch 6, wobei die Verarbeitungseinrichtung (4) ferner ausgebildet ist,
Information über die dreidimensionale Form des Objekts zu erhalten basierend auf dem Bild, das vom Objekt, auf das das Musterlicht projiziert wird, aufgenommen wird, und
eine Position und Orientierung des Objekts zu erhalten basierend auf der Information über die dreidimensionale Form und der Information über die zweidimensionale Form und einem Modell, das die Form des Objekts ausdrückt.

9. Messverfahren zum Messen einer Form eines Objekts, umfassend die folgenden Schritte:
Projizieren von Musterlicht, das abwechselnd helle Abschnitte und dunkle Abschnitte enthält, auf das Objekt;
Aufnahme eines Bilds des Objekts, auf das das Musterlicht projiziert wird; und
Spezifizieren einer Spitzenposition, bei der ein Luminanzwert ein lokales Maximum in einer vom aufgenommenen Bild erhaltenen Luminanzverteilung ist, und/oder einer Spitzenposition, bei der der Luminanzwert ein lokales Minimum in der Luminanzverteilung ist, und Spezifizieren einer Position eines lokalen Maximums und/oder einer Position eines lokalen Minimums in einem von der Luminanzverteilung erhaltenen Luminanzgradienten, und Erhalten von Information bezüglich der Form des Objekts basierend auf den spezifizierten Positionen,
wobei ein Verhältnis zwischen einer Breite des hellen Abschnitts und einer Breite des dunklen Abschnitts im Musterlicht 1:1 beträgt,
wobei eine Periode des Musterlichts im aufgenommenen Bild so eingestellt wird, dass ein Wert, der durch Normieren der Periode des Musterlichts durch eine Spread-Breite einer Point-Spread-Funktion eines optischen Bildaufnahmesystems zum Erzeugen eines Bilds, das das auf das Objekt projizierte Musterlicht umfasst, um das aufgenommene Bild aufzunehmen, erhalten wird, nicht größer als 22 ist, und
wobei die Spread-Breite 1/e² eines Spitzenwertes in der Point-Spread-Funktion ist.

## Revendications

1. Appareil de mesure (1) destiné à mesurer la forme d'un objet, comprenant :
un moyen de projection (2) destiné à projeter, sur l'objet, une lumière de motif comportant en alternance des parties claires et des parties foncées ;
un moyen de capture d'image (3) destiné à capturer une image de l'objet sur lequel la lumière de motif est projetée ; et
un moyen de traitement (4) destiné à spécifier au moins l'une d'une position de pic à laquelle une valeur de luminance est un maximum local dans une distribution de luminance obtenue à partir de l'image capturée, et d'une position de pic à laquelle la valeur de luminance est un minimum local dans la distribution de luminance, et à spécifier au moins l'une d'une position de maximum local et d'une position de minimum local dans un gradient de luminance obtenu à partir de la distribution de luminance, et à obtenir, sur la base des positions spécifiées, des informations concernant la forme de l'objet, un rapport entre une largeur de la partie claire et une largeur de la partie foncée dans la lumière de motif étant égal à 1:1,
dans lequel :
le moyen de capture d'image (3) comprend un capteur d'image (32), et un système optique de capture d'image (31) configuré pour former, sur le capteur d'image (32), une image comprenant la lumière de motif projetée sur l'objet devant être mesuré,
dans lequel une période de la lumière de motif sur le capteur d'image (32) est réglée de façon qu'une valeur, obtenue en normalisant la période de la lumière de motif sur le capteur d'image (32) par rapport à une largeur d'étalement d'une fonction d'étalement de point du système optique de capture d'image (31), ne soit pas supérieure à 22.

2. Appareil selon la revendication 1, dans lequel la largeur d'étalement est égale à 1/e² d'une valeur de pic dans la fonction d'étalement de point.

3. Appareil selon la revendication 1, dans lequel le moyen de traitement (4) est conçu pour générer le gradient de luminance en différentiant la distribution de luminance.

4. Appareil selon la revendication 1, dans lequel la lumière de motif comporte une partie caractéristique permettant d'identifier l'une de la partie claire et de la partie foncée.

5. Appareil selon la revendication 4, dans lequel la partie caractéristique comprend une pluralité de points agencés en réseau dans l'une de la partie claire et de la partie foncée.

6. Appareil selon la revendication 1, comprenant en outre :
un moyen d'éclairage (21) destiné à éclairer uniformément l'objet,
dans lequel le moyen de capture d'image (3) est conçu pour capturer une image de l'objet qui est uniformément éclairé par le moyen d'éclairage (21), et
le moyen de traitement (4) est conçu pour obtenir des informations de forme bidimensionnelle de l'objet, sur la base de l'image capturée en capturant l'objet qui est uniformément éclairé par le moyen d'éclairage (21).

7. Appareil selon la revendication 6, dans lequel les informations de forme bidimensionnelle comportent des informations concernant un bord de l'objet.

8. Appareil selon la revendication 6, dans lequel le moyen de traitement (4) est en outre conçu :
pour obtenir des informations de forme tridimensionnelle de l'objet sur la base de l'image capturée de l'objet sur lequel la lumière de motif est projetée, et
pour obtenir une position et une attitude de l'objet sur la base des informations de forme tridimensionnelle et des informations de forme bidimensionnelle et d'un modèle exprimant la forme de l'objet.

9. Procédé de mesure destiné à mesurer une forme d'un objet, comprenant les étapes consistant à :
projeter, sur l'objet, une lumière de motif comportant en alternance des parties claires et des parties foncées ;
capturer une image de l'objet sur lequel la lumière de motif est projetée ; et
spécifier au moins l'une d'une position de pic à laquelle une valeur de luminance est un maximum local dans une distribution de luminance obtenue à partir de l'image capturée, et d'une position de pic à laquelle la valeur de luminance est un minimum local dans la distribution de luminance, et spécifier au moins l'une d'une position de maximum local et d'une position de minimum local dans un gradient de luminance obtenu à partir de la distribution de luminance, et obtenir, sur la base des positions spécifiées, des informations concernant la forme de l'objet,
un rapport entre une largeur de la partie claire et une largeur de la partie foncée dans la lumière de motif étant égal à 1:1,
dans lequel une période de la lumière de motif dans l'image capturée est réglée de façon qu'une valeur, obtenue en normalisant la période du motif de lumière par rapport à une largeur d'étalement d'une fonction d'étalement de point d'un système optique de capture d'image pour former une image comprenant la lumière de motif projetée sur l'objet pour capturer l'image capturée, ne soit pas supérieure à 22, et
dans lequel la largeur d'étalement est égale à 1/e² d'une valeur de pic dans la fonction d'étalement de point.
